# EUROPEAN PATENT SPECIFICATION

(11) **EP 1 597 056 B1**
(45) Date of publication and mention of the grant of the patent: **30.07.2008**
(21) Application number: 04709280.4
(22) Date of filing: 09.02.2004
(51) Int. Cl.: B29D 11/00, B29C 33/00

(54) **CONTACT LENS MOULD**
KONTAKTLINSENFORM
MOULE POUR LENTILLE DE CONTACT

(30) Priority: 25.02.2003 GB 0304148
(43) Date of publication of application: 23.11.2005
(73) Proprietor: Sauflon CL Limited, Fareham Hampshire PO15 5TX (GB)
(72) Inventor: BROAD, Robert Andrew, Hamble Southampton SO31 4JS (GB); MCEVOY, Steven John, Ashurst Hants SO40 7AN (GB); MACCABEE, Gordon, Frederick, Southampton SO14 3TX (GB); DUNCAN, Alan, Fareham Hampshire PO14 1TY (GB)
(74) Representative: Ward, David Ian
(86) International application number: PCT/GB2004/000514
(87) International publication number: WO 2004/076160

(56) References cited:
- WO-A-03/002322
- US-A- 4 121 896
- US-A- 4 955 580
- US-A- 5 466 147

## Description

The present invention relates to an improved contact lens mould design, a process of producing contact lenses using said mould and the contact lens so produced.

A common method of manufacturing contact lenses commercially on a large scale is cast moulding using single use plastics moulds. A monomer composition is introduced into a mould which comprises a pair of mould halves which form a closed mould cavity when brought together. A significant problem with such a system is that the monomer compositions used in contact lens manufacture undergo volumetric shrinkage by as much as 10 to 20% upon polymerisation. If this shrinkage is not accounted for, the resultant lens may contain voids, bubbles or other imperfections such as edge defects, and may exhibit poor lens surface quality.

In the "Shepherd" process (see for example US 4,121,896), a well known and commercially successful process, a flexible lip is provided on one of the mould halves. The lip is positioned so that when the mould halves are brought together, the lip contacts.the lens forming surface of the other mould half and defines the periphery of the mould cavity. Upon polymerisation, the lip deforms (usually inwardly) allowing the two mould halves to move more closely together and hence reduce the volume of the mould cavity, so accounting for the shrinkage of the monomer composition. The Shepherd process is not without its problems however. In practice, it is found that the majority of the lenses produced in this manner are uncomfortable to wear due to edge defects. To produce reproducibly acceptable product at economic process yields therefore, the edges of the lenses are polished. This introduces an extra step into the manufacturing process and adds significant cost. In addition, the polishing step itself may damage the fragile lenses and some lens materials (e.g. fluorocarbon polymers) are too soft to polish successfully. Other problems include misalignment of the mould halves and contamination with polymer particles ("flash").

As the popularity of contact lenses has increased, a considerable amount of effort has been expended on how to overcome the shrinkage issue and maintain quality at reasonably low cost without high rejection rates. For example, in WO 93/04848, rather than having a deformable lip, the mould parts are designed for one to deform into the other during polymerisation. In US 4,197,266 a reservoir is provided around the mould cavity and connected therewith, such that during polymerisation monomer composition from the reservoir can flow into the cavity. In both GB 2 185 933 and US 4, 955, 580, one of the lens forming surfaces is provided with a flexible diaphragm portion which moves towards the other mould half under the suction forces created by the shrinkage. None of the above offers a completely satisfactory solution and so the need for an improved contact lens mould remains.

It is an object of the present invention to provide an improved contact lens mould which obviates or mitigates one or more of the known disadvantages of the prior art moulds. In particular, it is an object to provide an improved Shepherd-type mould which is capable of producing high quality lenses which do not require additional edge polishing.

According to the present invention there is provided a contact lens mould for producing a contact lens according to claim 1.

It will be understood that the convex and concave moulding surfaces define respectively the front and rear surfaces of the contact lens produced from the mould. It will also be understood by the skilled person that the convex moulding surface may be a bi-curve or even a tri-curve, i.e. the curvature may change towards the peripheral edge of the convex moulding surface. Such changes of curvature towards the periphery of the lens are commonly referred to as "edge lift".

As defined herein, where a surface is curved, the angle defined between that surface and another surface is the angle defined between the tangent of the curved surface and the other surface at their intersection.

The restriction in the angle between the radially inner surface of the lip and the abutment surface (hereinafter referred to as the included angle) ensures that when the mould halves are brought closer together during polymerisation, the lip flexes radially outwardly. The included angle before flexing is preferably about 65° to 75° and most preferably about 70°.

Preferably, the mould is configured so that after the lip has flexed radially outwardly the included angle is less than 75° and more preferably less than 65°. Preferably, the included angle is more than 30° and preferably more than 45°. Most preferably, the included angle is from about 55° to 65°. In addition, the included angle (after flexing) determines, at least in part, the edge shape of the lens produced.

Preferably, the angle between the abutment surface and the convex moulding surface is from about 140° to 160°, more preferably from about 145° to 155° and most preferably about 150°.

Mould halves are normally referred to as a male and female pair, the male half being received within the female half. The convex moulding surface may form part of either a male or female mould half. However, the convex moulding surface is preferably part of the male mould half, the concave moulding surface therefore preferably forming part of the female mould half.

Preferably, a reservoir is provided in one of the mould parts radially outwardly of and adjacent to the respective moulding surface. Preferably, the reservoir is a groove or channel which at least partially surrounds the respective moulding surface. More preferably, the reservoir is an annular groove which completely surrounds the respective moulding surface, usually the concave moulding surface.

In a preferred embodiment, the concave moulding surface is provided in the female mould half and the reservoir is an annular groove defined in part by a radially outer wall of the flexible annular lip.

The reservoir allows excess monomer which spills out of the moulding cavity as the mould halves are brought together to be collected. After polymerisation, the excess material ("flash") is retained in the reservoir and contamination of the lens is avoided.

Preferably, means are provided to limit the minimum distance between the convex and concave moulding surfaces. Said means ("dead stop") may conveniently comprise an abutment surface on each of the mould halves, relative movement of the male mould half towards the female mould half being prevented when the abutment surfaces are in mutual contact. It will be understood that the minimum distance between the moulding surfaces must be less than the distance between the moulding surfaces when the mould cavity is formed (i.e. when the flexible lip first touches the annular abutment surface of the first mould half), to allow shrinkage to be taken up by flexing of the lip.

Preferably, the mould halves are provided with centring means to ensure that in use the moulding surfaces are correctly aligned. Preferably, said mould halves are dimensioned such that one mould half (male) is an interference fit inside the other (female). Preferably, the interference fit is between peripheral walls of the mould parts remote from the moulding surfaces.

The present invention further resides in a method of manufacturing a contact lens according to claim 15.

Embodiments of the invention will now be described by way of example only with reference to the accompanying drawings in which:-
Figure 1 is a schematic cross section of a mould in accordance with the present invention,
Figures 2 is a detail view of Figure 1, and
Figure 3 is a schematic cross-sectional view of part of an alternative embodiment of the invention.

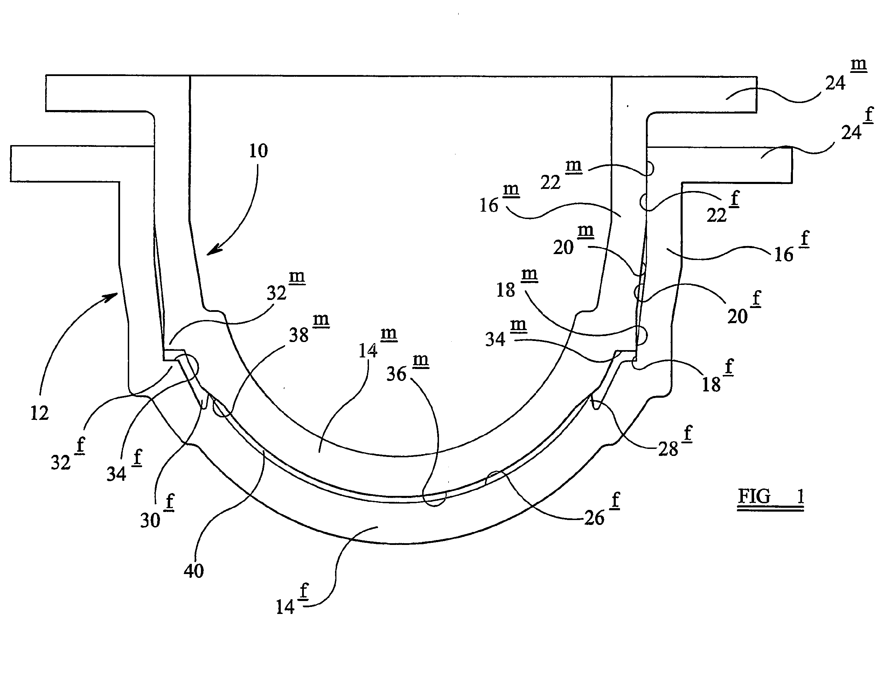

Referring to Figure 1, a contact lens mould comprises a male mould half 10 and a female mould half 12, both constructed from a thermoplastic plastics material such as polypropylene (although other polyolefins may be used). Reference numerals relating to parts of the male and female mould halves will be accorded the suffix "m" or "f" respectively. In the orientation illustrated, each mould half 10,12 comprises a base region 14 and a sidewall 16. The base region 14 is generally cup-shaped and integrally formed with the sidewall 16 which is generally tubular with a circular section. The inner surface of the sidewall 16f in the case of the female mould half 12 and the outer surface of the sidewall 16m in the case of the male mould half 10 has a short vertical lower section 18, slightly outwardly flaring intermediate section 20 and a vertical upper section 22. A free end of the upper section 22 is provided with a horizontal annular rim 24.

Referring specifically to the female mould half 12, an upper surface of the base region 14f has a concave region which serves as the concave moulding surface 26f in use and sequentially radially outwardly thereof an annular lip 28f, a groove 30f which serves as a monomer reservoir in use, and a shoulder 32f. The lip 28f is of relatively thin cross section and is therefore flexible. The shoulder 32f has a horizontal annular surface 34f which serves as part of a dead stop. The radially outer end of the horizontal annular surface 34f intersects with the vertical lower section 18f of the sidewall inner surface.

Referring specifically to the male mould part 10, a lower surface of the base region has a central convex region which serves as the convex moulding surface 36m in use and contiguous therewith an annular region of different curvature (in the embodiment shown the annular region is linear in section) which serves as an abutment surface 38m for the flexible lip 28f of the female mould half 12. A shoulder 32m is defined by the vertical lower section 18m of the sidewall outer surface and a horizontal annular surface 34m which serves as part of the dead stop.

The geometry of the two mould halves 10,12 is such that when in the initial moulding configuration (as shown in Figure 1), the flexible lip 28f of the female mould half 12 is in contact with the abutment surface 38m of the male mould half 10 such that a closed mould cavity 40 is defined between the moulding surfaces 26f, 36m. The horizontal annular surfaces 34m,34f which together define the dead stop are mutually spaced, whereas the outer surface sidewall lower section 18m of the male mould half 10 is an interference fit with the inner surface sidewall lower section 18f of the female mould half 12. The interference fit ensures correct centring of the mould halves 10,12.

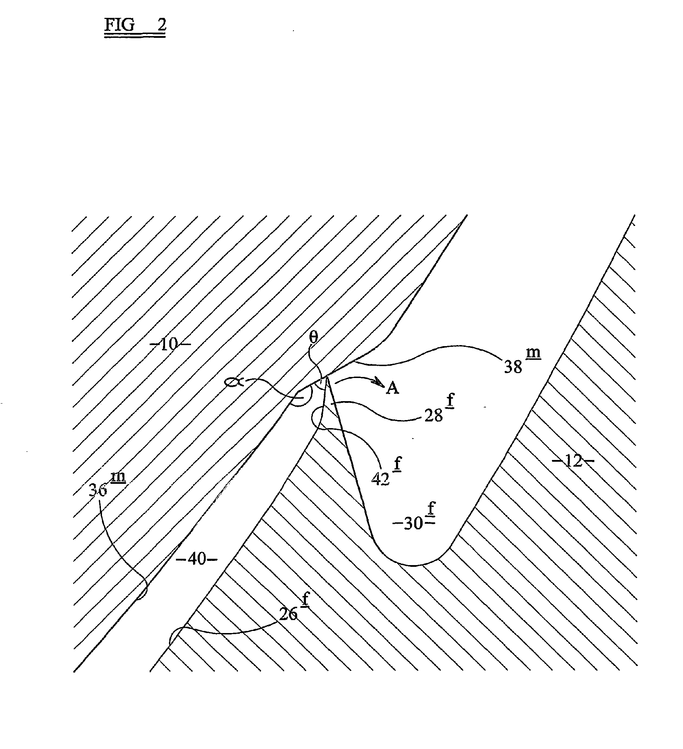

Referring to Figure 2, it can be seen that the angle θ between the flexible lip 28f and the abutment surface 38m is about 70° and the angle α between the convex moulding surface 36m and the abutment surface 38m is about 150°. It is important that the angle θ is less than 90° to ensure that in use, the lip 28f deflects radially outwardly as indicated by arrow A. The shape of the edge region of the lens produced is determined by the curvature of the radially inner surface of the lip 42f, the curvature of the abutment surface 38m and the angle α (although it will be appreciated that as the lip deflects angle θ will decrease).

In use, a measured dose of liquid monomer composition (such as a copolymer of acrylate and/or methacrylate and N-vinyl-lactams) is poured onto the concave moulding surface 26f of the female mould half 12. The male mould half 10 is then guided into the female mould half 12 until the lip 28f of the female mould half 12 abuts the abutment surface 38m thereby forming the mould cavity 40. As the two mould halves 10,12 are brought together, liquid monomer composition overflows the mould cavity 40 into the annular groove 30f. The volume of monomer composition dosed is marginally greater than the volume of the mould cavity 40 to ensure that voids are not formed. Correct centring and location of the mould halves 10,12 is ensured by the interference fit between the inner and outer surfaces 18f,18m of the respective sidewalls 16f,16m.

Polymerisation is effected by thermal initiation (although UV light or other initiation means may be used) . As the monomer composition polymerises, the volume of monomer/polymer in the mould cavity 40 decreases (shrinkage). The shrinkage causes a pressure drop in the mould cavity 40 which draws the male mould half 10 further into the female mould half 12 until the respective horizontal annular surfaces 34m,34f forming the dead stop abut, at which time no further relative movement is possible. The provision of the dead stop ensures that the shrinkage is controlled. To enable the shrinkage to be accommodated, the flexible lip 28f deflects radially outwardly along the abutment surface 38m, while maintaining line contact with the abutment surface 38m.

Once polymerisation is complete, the mould halves 10,12 are separated and the contact lens recovered. Excess polymer flash is retained in the annular groove 30f and so contamination of the lens is avoided. The dry lens is hydrated and packaged without edge polishing.

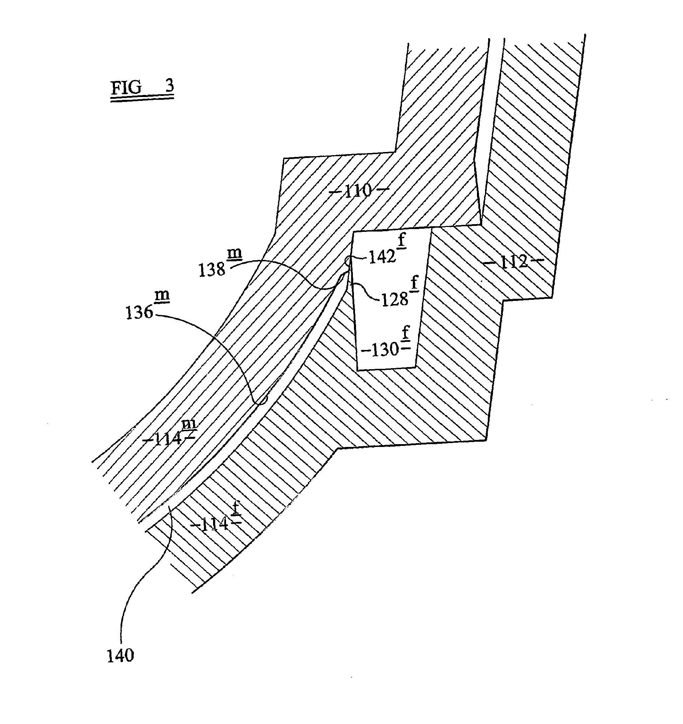

Figure 3 shows a different embodiment of the invention which is substantially the same as the previous embodiment (corresponding parts having corresponding reference numerals in the "100" series) except that the radially inner surface 142f of the lip 128f abuts the radially outer edge of the abutment surface 138m. In use, the contact line between the inner surface 142f of the lip 128f and the radially outer edge of the abutment surface 138m moves along the inner surface 142f of the lip 128f towards the concave moulding surface 126f. This contrasts to the previous embodiment in which the line contact moved relative to the abutment surface but was constant with respect to the lip.

## Claims

1. A contact lens mould for producing a contact lens, said mould comprising first and second mould halves (10,12), the first mould half (10) having a convex moulding surface (36m) of predetermined curvature, the second mould half (12) having a concave moulding surface (26f) of predetermined curvature,
wherein the first mould half (10) is provided with an annular abutment surface (38m) which circumferentially surrounds and is contiguous with the convex moulding surface (36m), and the second mould half (12) is provided with a flexible annular lip (28f) which circumferentially surrounds the concave moulding surface (26f),
and wherein, in use, when the mould halves (10,12) are brought together the annular lip (28f) forms a continuous line contact with the abutment surface (38m) whereby a mould cavity (40) is defined between the moulding surfaces (26f,36m), a radially inner surface (42f) of the annular lip (28f) and at least part of the abutment surface (38m).
and wherein an included angle (θ) of less than 90°, as measured within the mould cavity, is defined between the abutment surface (38m) and the radially inner surface (42f) of the lip (28f)
wherein in use as the mould halves (10,12) are brought closer together during polymerisation the lip (28f) flexes radially outwardly; **characterised in that** an angle (α) of less than 180°, as measured within the mould cavity, is defined between the abutment surface (38m) and the convex moulding surface (36m) at their intersection.

2. A mould as claimed in claim 1, wherein the included angle (θ) before flexing is 65° to 75°.

3. A mould as claimed in claim 1 or 2, wherein the mould is configured so that after the lip (28f) has flexed radially outwardly, the included angle (θ) is from 30 to less than 75°.

4. A mould as claimed in claim 3, wherein the included angle (θ) after flexing is from 55° to 65°.

5. A mould as claimed in any preceding claim, wherein the angle (α) between the abutment surface (38m) and the convex moulding surface (36m) is from 140° to 160°.

6. A mould as claimed in any preceding claim, wherein the convex moulding surface (36m) is part of the male mould half (10), the concave moulding surface (26f) forming part of the female mould half (12).

7. A mould as claimed in any preceding claim, wherein a reservoir is provided in one of the mould parts (10,12) radially outwardly of and adjacent to the respective moulding surface (26f, 36m).

8. A mould as claimed in claim 7, wherein the reservoir is a groove (30f) or channel which at least partially surrounds the respective moulding surface (26f).

9. A mould as claimed in claim 8, wherein the reservoir is an annular groove (30f) which completely surrounds the respective moulding surface (26f)

10. A mould as claimed in any preceding claim, wherein means are provided to limit the minimum distance between the convex and concave moulding surfaces (36m, 26f).

11. A mould as claimed in claim 10, wherein said means comprise an abutment surface (34m, 34f) on each of the mould halves (10,12), relative movement of the first mould half (10) towards the second mould half (12) being prevented when the abutment surfaces (34,34f) are in mutual contact.

12. A mould as claimed in any preceding claim, wherein the mould halves (10,12) are provided with centring means to ensure that in use the moulding surfaces (36m, 26f) are correctly aligned.

13. A mould as claimed in any preceding claim, wherein said mould halves (10,12) are dimensioned such that one mould half (10) is an interference fit inside the other (12).

14. A mould as claimed in claim 13, wherein the interference fit is between peripheral walls (18m, 18f) of the mould parts (10,12) remote from the moulding surfaces (36m,26f).

15. A method of manufacturing a contact lens using a mould in accordance with any preceding claim, comprising the steps of:-
(i) dosing the concave moulding surface (26f) of the second mould half (12) with contact lens monomer composition,
(ii) mating the first mould half (10) with the second mould half (12) such that a closed mould cavity (40) is defined between the moulding surfaces (36m,26f), said mould cavity (40) being filled with said dosed monomer composition,
(iii) polymerising said monomer composition, whereupon the moulding surfaces (36m,26f) move towards each other due to shrinkage, said movement being facilitated by radially outward flexing of the annular lip (28f),
(iv) separating the mould halves (10,12) whereby to release a polymeric dry contact lens, and
(v) hydrating the dry contact lens.

## Patentansprüche

1. Kontaktlinsenform zum Herstellen einer Kontaktlinse, wobei die Form eine erste und eine zweite Formhälfte (10, 12) umfasst, wobei die erste Formhälfte (10) eine konvexe Formungsfläche (36m) mit einer vorbestimmten Krümmung hat und die zweite Formhälfte (12) eine konkave Formungsfläche (26f) mit einer vorbestimmten Krümmung hat,
wobei die erste Formhälfte (10) mit einer ringförmigen Widerlagerfläche (38m) versehen ist, welche die konvexe Formungsfläche (36m) umlaufend umgibt und mit derselben zusammenhängt, und die zweite Formhälfte (12) mit einer flexiblen ringförmigen Lippe (28f) versehen ist, welche die konkave Formungsfläche (26f) umlaufend umgibt,
und wobei, bei Anwendung, wenn die Formhälften (10, 12) zusammengebracht werden, die ringförmige Lippe (28f) eine durchgehende Linienberührung mit der Widerlagerfläche (38m) bildet, wodurch ein Formhohlraum (40) zwischen den Formungsflächen (26f, 36m), einer in Radialrichtung inneren Fläche (42f) der ringförmigen Lippe (28f) und wenigstens einem Teil der Widerlagerfläche (38m) definiert wird,
und wobei ein eingeschlossener Winkel (θ) von weniger als 90°, gemessen innerhalb des Formhohlraums, zwischen der Widerlagerfläche (38m) und der in Radialrichtung inneren Fläche (42f) der ringförmigen Lippe (28f) definiert wird,
wobei, bei Anwendung, wenn die Formhälften (10, 12) während des Polymerisierens zusammengebracht werden, sich die Lippe (28f) in Radialrichtung nach außen biegt, **dadurch gekennzeichnet, dass** ein Winkel (α) von weniger als 180°, gemessen innerhalb des Formhohlraums, zwischen der Widerlagerfläche (38m) und der konvexen Formungsfläche (36m) an deren Überschneidung definiert wird.

2. Form nach Anspruch 1, wobei der eingeschlossene Winkel (θ) vor dem Biegen 65° bis 75° beträgt.

3. Form nach Anspruch 1 oder 2, wobei die Form so konfiguriert ist, dass der eingeschlossene Winkel (θ), nachdem sich die Lippe (28f) in Radialrichtung nach außen gebogen hat, von 30 bis weniger als 75° beträgt.

4. Form nach Anspruch 3, wobei der eingeschlossene Winkel (θ) nach dem Biegen von 55° bis 65° beträgt.

5. Form nach einem der vorhergehenden Ansprüche, wobei der Winkel (α) zwischen der Widerlagerfläche (38m) und der konvexen Formungsfläche (36m) von 140° bis 160° beträgt.

6. Form nach einem der vorhergehenden Ansprüche, wobei die konvexe Formungsfläche (36m) ein Teil der Patrizenhälfte (10) ist, wobei die konkave Formungsfläche (26f) einen Teil der Matrizenhälfte (12) bildet.

7. Form nach einem der vorhergehenden Ansprüche, wobei ein Reservoir in einem der Formteile (10, 12) in Radialrichtung außerhalb der jeweiligen Formungsfläche (26f, 36m) und derselben benachbart bereitgestellt wird.

8. Form nach Anspruch 7, wobei das Reservoir eine Rille (30f) oder ein Kanal ist, die oder der wenigstens teilweise die jeweilige Formungsfläche (26f) umgibt.

9. Form nach Anspruch 8, wobei das Reservoir eine ringförmige Rille (30f) ist, welche die jeweilige Formungsfläche (26f) vollständig umgibt.

10. Form nach einem der vorhergehenden Ansprüche, wobei Mittel bereitgestellt werden, um die minimale Entfernung zwischen der konvexen und der konkaven Formungsfläche (36m, 26f) zu begrenzen.

11. Form nach Anspruch 10, wobei die Mittel eine Widerlagerfläche (34m, 34f) an jeder der Formhälften (10, 12) umfassen, wobei eine relative Bewegung der ersten Formhälfte (10) hin zu der zweiten Formhälfte (12) verhindert wird, wenn sich die Widerlagerflächen (34m, 34f) in gegenseitiger Berührung befinden.

12. Form nach einem der vorhergehenden Ansprüche, wobei die Formhälften (10, 12) mit Zentrierungsmitteln versehen sind, um sicherzustellen, dass die Formungsflächen (36m, 26f) bei Anwendung richtig ausgerichtet werden.

13. Form nach einem der vorhergehenden Ansprüche, wobei die Formhälften (10, 12) derart bemessen sind, dass die eine Formhälfte (10) in Presspassung innerhalb der anderen (12) sitzt.

14. Form nach Anspruch 13, wobei die Presspassung zwischen umlaufenden Wänden (18m, 18f) der Formteile (10, 12), fern von den Formungsflächen (36m, 26f), besteht.

15. Verfahren zum Herstellen einer Kontaktlinse unter Verwendung einer Form nach einem der vorhergehenden Ansprüche, das die folgenden Schritte umfasst:
(i) Dosieren der konkaven Formungsfläche (26f) der zweiten Formhälfte (12) mit einer Kontaktlinsen-Monomerzusammensetzung,
(ii) Zusammenpassen der ersten Formhälfte (10) mit der zweiten Formhälfte (12) derart, dass ein geschlossener Formhohlraum (40) zwischen den Formungsflächen (36m, 26f) definiert wird, wobei der Formhohlraum (40) mit der dosierten Monomerzusammensetzung gefüllt ist,
(iii) Polymerisieren der Monomerzusammensetzung, worauthin sich die Formungsflächen (36m, 26f) auf Grund der Schrumpfung hin zueinander bewegen, wobei die Bewegung durch das Biegen der ringförmigen Lippe (28f) in Radialrichtung nach außen erleichtert wird,
(iv) Trennen der Formhälften (10, 12), wodurch eine trockene Polymer-Kontaktlinse freigegeben wird, und
(v) Hydrieren der trockenen Kontaktlinse.

## Revendications

1. Moule pour lentille de contact, pour produire une lentille de contact, ledit moule comprenant des première et deuxième moitiés de moule (10, 12), la première moitié du moule (10) comportant une surface de moulage convexe (36m) avec une courbure prédéterminée, la deuxième moitié de moule (12) comportant une surface de moulage concave (26f) avec une courbure prédéterminée ;
la première moitié du moule (10) comportant une surface de butée annulaire (38m) entourant la circonférence de la surface de moulage convexe (36m) et étant contiguë à celle-ci, la deuxième moitié du moule (12) comportant un rebord annulaire flexible (28f) entourant la circonférence de la surface de moulage concave (26f);
dans lequel, en service, les moitiés du moule (10, 12) étant rapprochées, le rebord annulaire (28f) établit un contact linéaire continu avec la surface de butée (38m), une cavité du moule (40) étant ainsi définie entre les surfaces de moulage (26f, 36m), une surface radialement interne (42f) du rebord annulaire (28f) et au moins une partie de la surface de butée (38m) ;
un angle inclus (θ) inférieur à 90°, mesuré dans la cavité du moule, étant défini entre la surface de butée (38m) et la surface radialement interne (42f) du rebord (28f) ;
dans lequel, en service, lorsque les moitiés du moule (10, 12) sont rapprochées davantage au cours de la polymérisation, le rebord (28f) est fléchi radialement vers l'extérieur ; **caractérisé en ce qu'**un angle (α) inférieur à 180°, mesuré dans la cavité du moule, est défini entre la surface de butée (38m) et la surface de moulage convexe (36m), au niveau de leur intersection.

2. Moule selon la revendication 1, dans lequel l'angle inclus (θ) est compris entre 65° et 75° avant le fléchissement.

3. Moule selon les revendications 1 ou 2, dans lequel le moule est configuré de sorte qu'après le fléchissement radial vers l'extérieur du rebord (28f), l'angle inclus (θ) est compris entre 30° et moins de 75°.

4. Moule selon la revendication 3, dans lequel l'angle inclus (θ) est compris entre 55° et 65° après le fléchissement.

5. Moule selon l'une quelconque des revendications précédentes, dans lequel l'angle (α) entre la surface de butée (38m) et la surface de moulage convexe (36m) est compris entre 140° et 160°.

6. Moule selon l'une quelconque des revendications précédentes, dans lequel la surface de moulage convexe (36m) fait partie de la moitié mâle du moule (10), la surface de moulage concave (26f) faisant partie de la moitié femelle du moule (12).

7. Moule selon l'une quelconque des revendications précédentes, dans lequel un réservoir est agencé dans l'une des parties de moule (10, 12), radialement vers l'extérieur de la surface de moulage respective (26f, 36m), et de manière adjacente à celle-ci.

8. Moule selon la revendication 7, dans lequel le réservoir est constitué par une rainure (30f) ou un canal, entourant au moins partiellement la surface de moulage respective (26f).

9. Moule selon la revendication 8, dans lequel le réservoir est constitué par une rainure annulaire (30f), entourant complètement la surface de moulage respective (26f).

10. Moule selon l'une quelconque des revendications précédentes, comportant des moyens pour limiter la distance minimale entre les surfaces de moulage convexe et concave (36m, 26f).

11. Moule selon la revendication 10, dans lequel lesdits moyens comprennent une surface de butée (34m, 34f) sur chacune des moitiés du moule (10, 12), le déplacement relatif de la première moitié du moule (10) vers la deuxième moitié du moule (12) étant empêché lorsque les surfaces de butée (34, 34f) se contactent mutuellement.

12. Moule selon l'une quelconque des revendications précédentes, dans lequel les moitiés du moule (10, 12) comportent des moyens de centrage pour assurer l'alignement correct des surfaces de moulage (36m, 26f) en service.

13. Moule selon l'une quelconque des revendications précédentes, dans lequel lesdites moitiés du moule (10, 12) sont dimensionnées de sorte qu'une moitié du moule (10) est ajustée par serrage dans l'autre moitié (12).

14. Moule selon la revendication 13, dans lequel l'ajustement serré est établi entre les parois périphériques (18m, 18f) des parties du moule (10, 12), en un point éloigné des surfaces de moulage (36m, 26f).

15. Procédé de production d'une lentille de contact par l'intermédiaire d'un moule selon l'une quelconque des revendications précédentes, comprenant les étapes ci-dessous :
(i) dosage de la surface de moulage concave (26) de la deuxième moitié du moule (12) avec une composition monomère de la lentille de contact;
(ii) accouplement de la première moitié du moule (10) avec la deuxième moitié du moule (12), de sorte à définir une cavité de moule fermée (40) entre les surfaces de moulage (36m, 26f), ladite cavité du moule (40) étant remplie de ladite composition monomère dosée ;
(iii) polymérisation de ladite composition monomère, les surfaces de moulage (36m, 26f) se déplaçant ainsi l'une vers l'autre par suite du retrait, ledit déplacement étant facilité par le fléchissement radial vers l'extérieur du rebord annulaire (28f) ;
(iv) séparation des moitiés du moule (10, 12) pour dégager ainsi une lentille de contact polymère sèche ; et
(v) hydratation de la lentille de contact sèche.
